# EUROPEAN PATENT APPLICATION

(11) **EP 3 608 342 A1**
(43) Date of publication of application: **12.02.2020**
(21) Application number: 19000360.8
(22) Date of filing: 02.08.2019
(51) Int. Cl.: C08B 15/02, C08H 8/00

(54) **METHOD FOR PRODUCING CELLULOSE NANOCRYSTALS (CNCS)**

(30) Priority: 06.08.2018 IT 201800007870
(71) Applicant: CLS PROVIDENTIA S.R.L., 21047 Saronno (VA) (IT); UNIVERSITA' DEGLI STUDI DI MILANO, 20122 Milano (IT)
(72) Inventor: Piergiovanni, Luciano, 21047 Saronno - VA (IT); Amoroso, Luana, 21047 Saronno - VA (IT)
(74) Representative: Caricato, Francesca

(57) **Abstract**

A method is proposed for producing cellulose nanocrystals (CNCs) comprising:
i. a step of feeding a cellulosic raw material, such as native vegetable fibres or vegetable biomass materials or by-products of the textile, milling industries, and of paper,
ii. a step of putting the cellulosic raw material in contact with an oxidative acid component at high temperature to produce cellulose nanocrystals (CNCs) and
iii. a step of recovery of the cellulose nanocrystals obtained,
in which method there is provided a hydrolytic-oxidative microwave-assisted treatment, with closed microwave reactor under pressurised conditions.

The nanocrystals obtained can advantageously form pourable suspensions, for example as a thin and functional cladding on the activated surface of flexible packaging materials.

## Description

### Field of the invention

The invention relates to a method for producing cellulose nanocrystals (CNCs) according to the introduction of claim 1, as well as to the nanocrystals obtained and to the use thereof.

### Background of the invention and prior art/known technique

The conventional procedure currently in use for preparing cellulose nanocrystals (CNCs) consists in subjecting a suitable cellulosic raw material to a strong acid hydrolysis under rigorously controlled temperature, agitation and time conditions. The most common protocol entails the use of acidic minerals (typically approx. 64% w/w sulphuric acid) at a temperature range from 45 to 70 °C, for times varying according to the temperature (Favier et al. 1995, Bondeson et al. 2006, Filson et al. 2009, Kos et al. 2014).

These procedures are expensive; they necessitate a high initial capital investment and have increased operating costs on account of the corrosivity, safety problems and the need to treat/dispose of hazardous waste from these acids and their by-products. Furthermore, these procedures require relatively pure cellulosic raw materials, such as steam-exploded wood pulp and microcrystalline cellulose, or recourse to pre-treatments using alkaline bleaching agents, to remove the non-cellulosic content from the fibres (for example, lignin, pectin, hemicellulose, etc.). The use of highly corrosive mineral acids (which necessitate very expensive corrosion-resistant apparatus), and the laborious pre-treatment/isolation steps, impede large-scale production and actual applications for CNCs (Leung et al. 2011).

To improve yields and the useful properties both of nanofibres and of nanocrystals of cellulose, various oxidation techniques have been used, such as TEMPO oxidation and with periodate-chlorite, also used alone or in combination in the pre-treatment of cellulosic raw materials (Saito et al., 2006, Liimatainen et al., 2012).

TEMPO oxidation is the conversion of the hydroxyl groups of cellulose into carboxylic fractions by means of the radical 2,2,6,6-tetramethylpipendinyl 1-oxyl; use of the latter has been proposed both to promote the nanofibrillation process (NFC amplitude 3 to 4 nm), as an intermediate step to achieve grafting onto cellulose chains, and as a chemical pathway to increase the crystallinity of cellulose and its dispersion in water (Saito et al., Al2007).

Moreover, the recent international scientific literature has reported a simple and versatile procedure for producing highly crystalline CNCs that requires the use of ammonium persulfate (NH₄)₂SO₈, an oxidant of low long-term toxicity, elevated solubility in water and low cost. Recent studies have demonstrated that the latter enables the hydrolytic fragmentation of cellulose to be obtained in a single step, for the formation of nanocrystals, and the oxidation of some primary hydroxyl groups into carboxylic groups, which is very useful in incorporating or grafting CNCs into packaging materials and in the possibility of binding functionalising molecules to CNCs (Mascheroni et al., 2016).

This hydrolytic and oxidative process, also covered by a patent from 2014 (US 8,900,706) describes, for the preparation of cellulose nanocrystals, a treatment of heating the raw materials at around 60 °C in 1M ammonium persulfate (APS) with vigorous agitation. The reaction time proves dependent on the substrate, varying from 5 h to 24 h for complex substrates, typically 16 h for the most common cellulosic materials, such as hemp, flax etc.

The method with APS is broadly applicable to a variety of native vegetable fibres and to other sources of cellulose, simultaneously removing lignin and amorphous cellulose to produce high-quality CNCs.

In the protocol with APS, as for those with use of mineral acids, the envisaged heating is customarily conventional heating, signifying that the energy is transferred by convection, conduction and radiation. However, the rate of conventional heating is slow by comparison with heating by microwaves. In microwave heating, electromagnetic energy is converted into thermal energy via a direct interaction between the incident radiation and the molecules of the target material. Microwave heating is selective and specific, involving a reduction in the work time during hydrolysis, so increasing the yield of anticipated products (Vennkatesh and Raghavan 2004).

The microwave (MW) heating method has been found to be a valid alternative in the production of organic compounds, polymers, inorganic materials and nanomaterials, with shorter reaction times and rates of reaction, and higher selectivity and yield as compared with conventional heating methods.

By accurately controlling some specific parameters of the microwave-assisted chemistry (temperature, pressure and temperature slope, researchers are today capable of designing and developing advanced and new-generation nanomaterials (Gawande et al. 2014). As a result of more efficient in-process heating, microwave energy is furthermore considered to be more environmentally sound, requiring a lower energy consumption than conventional heating processes (Zhu and Cheng 2014).

### Summary of the invention

The underlying aim of the invention is to improve and optimise the hydrolytic-oxidative method described in the patent of Leung et al., and to provide a simple and cost-effective method for the rapid preparation of CNCs while avoiding the drawbacks of the prior art.

The aim indicated is resolved according to the present invention with a method for producing nanocrystals of cellulose having the characteristics of claim 1.

Further advantageous embodiments are discernible from the dependent claims.

Numerous and important advantages are obtained with the method according to the invention.

In contrast with the conventional approaches, which are considered associated with a high consumption of energy and time and to be expensive and non-ecological, the present invention discloses a method with microwave-assisted APS for producing cellulose nanocrystals (as a carrier for the required energy) and a mixture of different reagents of both hydrolytic and oxidative capabilities. This is the fundamentally novel element, in that it is proposed by nobody else for the production of CNCs, relative to the present-day state of the art. It presupposes the presence of a supplementary auxiliary oxidative reagent under pressurised conditions in a closed reaction system. With this new approach, the production process acquires environmental, chemical and economic advantages, because it has opened up the possibility of achieving fast chemical reactions and a rapid preparation of materials within a very short time, maximally 3 h, instead of 16 h or even days, as usually required by conventional heating methods. This fact leads to relatively low costs, to an energy saving, and to high efficiency in the production of CNCs. From these fundamental and innovative aspects just described, others of no lesser novelty are derived.

In other words, in accordance with the teaching of the present invention, the prolonged conventional heating of the prior art is replaced with more rapid heating based on microwave technology, under pressure of air and/or ozone between 2 and 20 bar, and the oxidative action of APS is combined with the addition of an effective oxidising agent, such as hydrogen peroxide, chromic acid, peracetic acid, potassium dichromate, sodium (meta)periodate, or lead tetraacetate. It will be recalled that the first reagent (APS), or ammonium persulfate, was never used with other oxidising agents, nor with the use of microwaves. All the complementary reagents, strong oxidants such as oxygenated water, peracetic acid and ozone, express their activity via the liberation of non-toxic gaseous oxygen, a phenomenon which causes an increase in pressure within the process reactor, thus representing a modifiable factor capable of regulating times and yields of the proposed process. The process times for producing CNCs are predicted and achieved using an alternately functioning dual reactor (shift reactor) that confers continuity on the process and optimises productivity. The combination of the proposed reagents (ammonium persulfate) plus a strong gaseous oxidant is, by contrast with other oxidants, capable of introducing carboxylic groups onto the CNC molecules that are advantageous for applications of plastic film varnishes (coatings). A further innovative aspect of the present invention are the shorter processing times, easily a tenth of the length of those of the prior art, with the use of APS (ammonium persulfate).

With the simple and cost-effective method according to the invention for rapid preparation of CNCs, industrial-scale production of nanomaterials is guaranteed, thus making it more attractive for ecological economy. Pairing of the hydrolytic/oxidative action of APS with a further oxidising agent (ozone, hydrogen peroxide, chromic acid, peracetic acid, potassium dichromate, sodium (meta)-periodate, or lead tetraacetate, at a pressure above atmospheric pressure and under microwave irradiation will make it easier to obtain CNCs from agricultural biomasses and cellulose-rich by-products also.

### Experimental section - preferred examples

### Method for preparing CNCs

According to the new approach proposed by the present invention, the microwave assisted preparation of CNCs implies the cellulosic material, whether cellulosic or even ligno-cellulosic raw material, or fully heated, together with ammonium persulfate plus the appropriate oxidative solution, in a closed microwave reactor system under pressurised conditions.

The conditions of reaction, such as time, pressure, temperature and APS, as well as the concentrations of supplementary oxidant, can be controlled to provide yields and satisfactory crystals having the desired characteristics.

In particular, for our experiments waste cotton dust (by-product of the production of cellulosic wadding) and 1M APS solution (ratio of fibres to APS 10:1 g/l) were placed in a microwave pressure vessel (HVT50). The suspension was homogenised by agitating for 5 min, and transferred to a microwave digestion system throughout the heating procedure. For the heating, a single magnetron was provided, that delivers up to 850W of microwave energy over the whole power range. The sensor system of the apparatus enabled automatic scanning of each reaction vessel, as well as monitoring of the rotation of the rotor, to guarantee uniform microwave heating and prevent localised overheating. For precise control of the reaction, the temperature of the vessel was monitored continuously with an IR temperature sensor, taking the measurements at the bottom of the cavity. Microwave-assisted heating was performed in accordance with different time-temperature programmes (as shown in Table 1), varying the following process variables: (1) rate of increase of the temperature (slope), (2) maximum temperature attained, (3) maintenance time of the maximum temperature (stationary phase), (4) rate of recooling to ambient temperature.

In order to compare the characteristics of the characteristic nanocrystals obtained using the two heating methods (conventional and microwave), we produced samples of CNCs using both of the said methods of heating. The CNCs were therefore prepared from the same raw material, cotton dust using the hydrolytic-oxidative method proposed by Leung et al. (2011), as reported in Table 1 (C₁). Approximately 10 g of ground cotton dust and 1 litre of APS solution (1M) were introduced into a large beaker on a plate that heats by magnetic stirring, fitted with a Vertex Digital heat regulator. The mixture was reheated and stirred continuously at 75°C for 16 h, limiting evaporation by means of a non-sealed cover.

At the end of both heating processes, the suspension of CNCs obtained was transferred into a centrifuge tube and centrifuged at 4000 rpm for 30 min with addition of distilled water, for the purpose of removing excess acid and rinsing the suspensions. The centrifugation and washing procedure was repeated until the pH of the samples was about 4. After adjusting the pH to 8 with 0.5 M NaOH, the suspensions were sonicated for 5 min (with an ultrasound probe, at 70% maximum power) and filtered in a vacuum with filter paper (pore diameter 1 to 2 µm) to remove contamination and large aggregations.

### Table 1. Microwave heating programmes for producing CNCs

**Table 1**

| **Microwave method** | **Programme** | | | **Total heating time** | **Cooling (°C)** |
|---|---|---|---|---|---|
| | **Slope (min: sec)** | **Temperature (°C)** | **Stationary phase (min: sec)** | | |
| M₁ | 10:00 | 115 | 70:00 | 01:20 | 50 |
| M₂ | 15:00 | 120 | 60:00 | 01:15 | 50 |
| M₃ | 30:00 | 120 | 60:00 | 01:309 | 50 |
| M₄ | 15:00 | 100 | 30:00 | 02:25 | 50 |
| | 99:00 | 120 | 01:00 | | |
| M₅ | 15:00 | 100 | 30:00 | 02:25 | 50 |
| | 99:00 | 130 | 01:00 | | |
| M₆ | 05:00 | 80 | 00:00 | | |
| | 75:00 | 110 | 00:00 | 03:00 | 50 |
| | 99:00 | 130 | 01:00 | | |
| M₇ | 10:00 | 90 | 1:00 | | |
| | 10:00 | 100 | 40:00 | 02:40 | 50 |
| | 99:00 | 120 | 0:00 | | |
| M₈ | 09:00 | 80 | 01:00 | | |
| | 84:00 | 90 | 01:00 | 03:00 | 50 |
| | 84:00 | 110 | 01:00 | | |
| M₉ | 09:00 | 80 | 1:00 | | |
| | 84:00 | 90 | 1:00 | 03:00 | 50 |
| | 84:00 | 130 | 1:00 | | |
| M₁₀ | 90:00 | 125 | 00:00 | 01:30 | 50 |
| M₁₁ | 70:00 | 140 | 00:00 | 01:10 | 50 |
| | | | | | |

| **Conventional method** | **Temperature** | | | **Total heating time** | **Cooling (°C)** |
|---|---|---|---|---|---|
| C₁ | 75 | | | 16:00 | 25 |

### Characterisation of CNCs using the light diffusion technique (dynamic and electrophoretic light scattering)

IN each series of experimental conditions, the dispersions of purified CNCs, obtained by each treatment, were analysed in terms of hydrodynamic diameter (d_{H}) and zeta (ζ) potential, with the aim of evaluating the influence of the hydrolytic procedures. The determinations were performed using a Litesizer 500 instrument (Anton Paar), by exploiting respectively the principles of dynamic and electrophoretic diffusion of light. These parameters are very important because the small diameter and the elevated absolute zeta potential are fundamental for the desired nanocrystal characteristics and for their applications for packaging materials.

Table 2 Hydrodynamic diameter and zeta potential of CNC suspensions using different heating processes

**(Table 2 follows)**

| Type of heating | Method | Hydrodynamic diameter dH (µm) | Zeta (ζ) potential (V) |
|---|---|---|---|
| Microwave | M1 | 0.2689 ± 0.0089 | -0.0232 ± 0.0004 |
| | M2 | 0.1634 ± 0.0022 | -0.0318 ± 0.0017 |
| | M3 | 0.1639 ± 0.0024 | -0.0375 ± 0.0058 |
| | M4 | 0.1837 ± 0.0035 | -0.0227 ± 0.0009 |
| | M5 | 0.1708 ± 0.0032 | -0.0301 ± 0.0007 |
| | M6 | 0.1910 ± 0.0116 | -0.0283 ± 0.0009 |
| | M7 | 0.1732 ± 0.0008 | -0.0278 ± 0.0004 |
| | M8 | 0.1789 ± 0.0038 | -0.0307 ± 0.0001 |
| | M9 | 0.1496 ± 0.0091 | -0.0387 ± 0.0029 |
| | M10 | 0.2020 ± 0.0069 | -0.0319 ± 0.0006 |
| | M11 | 0.1822 ± 0.0034 | -0.0289 ± 0.0007 |
| Conventional | C1 | 0.175 ± 0.0020 | -0.0385 ± 0.6000 |

From the data collected (Table 2), it can be seen that all the samples formed stable suspensions in water with a mean hydrodynamic diameter varying from around 111158 to 269 nm, as measured with dynamic light scattering (DLS).

As illustrated in Table 2, the mean dH of the nanoparticles of cellulose originating from different microwave treatments is comparable and, for a few treatments (M₂, M₃, M₉), even smaller than that obtained using conventional heating over a much longer reaction time (C₁). Only the microwave treatments M₁, M₆ and M₁₀ produced larger particles than the conventional process, probably on account of excessively elevated treatment conditions, not allowing for complete hydrolysis of amorphous regions of the starting cellulose fibres.

The mean zeta (ζ) potentials, determined with both heating systems, reflect a favourable stability of the CNC suspensions, which is therefore also obtainable within shorter treatment times involved in MW heating, by perfecting the treatment variables. Under optimal reaction conditions, M₃ and M₉, the zeta potentials were respectively -37.5 v and -38.7 v, highly adapted to potential surface changes or chemical grafts. These values suggest that the heating method proposed in the present invention can be used to produce CNC suspensions that can be spread effectively, as a thin and functional coating on the activated surface of flexible packaging materials.

From the above description it can be seen that, with the method outlined in the invention, the indicated aim is effectively achieved, resulting in the advantages cited.

In practice, the experts in the field will be able to propose and introduce modifications or variants without thereby exceeding the scope of protection of the present invention as described and claimed.

Indeed, it bears repeating that thanks to the present method the production of cellulose nanocrystals is achieved with by-products of the textile and paper industries. This represents a significant innovation compared with the prior art. Furthermore, the combination of using microwaves (as a carrier for the necessary energy) and of the acid-oxidative reagent is proposed by no-one. It should also be reiterated that the reagent ammonium persulfate is intrinsically a strong oxidant, much stronger than the sulphuric acid used in other methods and in the prior art. With the present method, it is proposed to add other oxidising agents to the ammonium persulfate (APS), such as for example peracetic acid, oxygenated water, or ozone, with a consequent pressure increase within the reactor at the rather high values given in the preceding tables. This combination, which has never been used, and which we consider to be the significant innovation of the entire method, ensures an extensive fragmentation of the cellulose into crystalline nanoparticles and an ample incorporation of carboxyl groups (-COOH), which are not present in the hydrolyses performed with other reagents, but which are extremely useful and functional. The characteristics of nanocrystals obtained according to the method described so far have characteristics that render them unique with respect to the prior art; by an oxidation effect they in fact have a very high load density determined by the many carboxyl groups obtained within a short time, due to the microwaves and the oxidising agents. The thin coating obtained, with a thickness of less than 1 micrometre, has gas barrier performances more than 10 times that of the common synthetic resins (which have thicknesses of 3-5 micrometres), and this aspect represents a further innovation relative to the prior art.

The totality of the innovations presents in the method described are achieved and protected within the scope of the following claims.

### Bibliographical references

Bondeson D., Mathen A., Oksman K. (2006). Optimization of the isolation of nanocrystals from microcrystalline cellulose by acid hydrolysis. Cellulose 13(2): 171-180.
Favier V., Canova G.R., Cavaille' J.Y., Chanzy H., Dufresne A., Gauthier C. (1995). Nanocomposite materials from latex and cellulose whiskers. Polym Adv Technol 6(5) : 351-355.
Filson P.B., Dawsono-Andoh B. E., Schwegler-Berry D. (2009). Enzymatic-mediated production of cellulose nanocrystals from recycled pulp. Green Chem. II, 1808-1814
Gawande M.B., Shelke S.N., Zboril R., Varma R.S.., (2014). Microwave-Assisted Chemistry: Synthetic applications for Rapid Assembly of Nanomaterials and Accounts of Chemical Research, 47(4), 1338-1348.
Kos T., Anzlovar A, Kunaver M., Huskic M., Zagar E. (2014). Fast preparation of nanocrystalline cellulose by microwave-assisted hydrolysis. Cellulose, 21(4): 2579-2585.
Leung A., Hrapovic S., Lam E., Liu Y.L., Male K.B., Mahmoud K.A., Luong J.H.T (2011) Characteristics and properties of carboxylated cellulose nanocrystals prepared from a novel one-step procedure. Small 7(3): 302-305.
Leung C.W., Luong J.H.T, Hrapovic S., Lam E., Liu Y., Male K.B., Mahmoud K., Rho D. (2014) Cellulose nanocrystals from renewable biomass. United States patent No.: US 8,900,706 B2.
Mascheroni E., Rampazzo R., Ortenzi MA, Piva G., Bonetti S., Piergiovanni L, 2016. Comparison of cellulose nanocrystals obtained by sulfuric acid hydrolysis and ammonium persulfate, to be used as coating on flexible food-packaging materials. Cellulose 23(1), 779-793.
Venkatesh M.S., Raghavan G.S.V. (2004). An Overview of Microwave Processing and Dielectric Properties of Agri-Food Materials. Biosystems Engineering 88(1): 1-18.
Zhu YJ. and Chen F., (2014). Microwave-assisted Preparation of Inorganic Nanostructures in Liquid Phase. Chem. Rev., 114(12): 6462-6555.
Saito T., Kimura S, Nishiyama Y, Isogai A. Cellulose nanofibers prepared by TEMPO-mediated oxidation of native cellulose. Biomacromolecules 2007; 8(8):2485-2491.
Saito T., Nishiyama Y, Putaux J-L., Vignon M, Isogai A. Homogeneous suspensions of individualized microfibrils from TEMPO-catalyzed oxidation of native cellulose. Biomacromolecules 2006; 7(6): 1687-1691.
Liimatainen H, Visanko M, Sirvio JA, HormiOEO, Niinimaki J. Enhancement of the microfibrillation of wood cellulose through sequential periodate-chlorite oxidation. Biomacromolecules 2012; 13(5): 1592-1597

## Claims

1. Method for producing cellulose nanocrystals (CNCs) comprising:
i. a step of feeding a cellulosic raw material, such as native vegetable fibres or vegetable biomass materials or by-products of the textile, milling industries, and of paper,
ii. a step of putting the cellulosic raw material in contact with an oxidative acid component in which the cellulosic raw material is subjected to an acid hydrolysis using ammonium persulfate with addition of an oxidising agent and heated in a closed microwave reactor, to produce cellulose nanocrystals (CNCs) and
iii. a step of recovery of the cellulose nanocrystals obtained,
**characterised in that** the oxidising agent is selected preferably from the group consisting of ozone, hydrogen peroxide, chromic acid, peracetic acid, potassium dichromate, sodium (meta)periodate, lead tetraacetate, and the like.

2. Method according to claim 1, **characterised in that** the microwave heating takes place under pressure of air and/or ozone between 2 and 20 bar.

3. Method according to one or more of the preceding claims, **characterised in that** said method takes place in a double shift, that is with two reactors, one which does the work and the other which prepares the chemical reaction.

4. Method according to one of claims 1 to 3, **characterised in that** the cellulosic raw material is made up of native vegetable fibres.

5. Method according to one of claims 1 to 3, **characterised in that** the cellulosic raw material is made up of vegetable biomass materials.

6. Method according to one of claims 1 to 3, **characterised in that** the cellulosic raw material is made up of by-products of the textile, milling industries, and of paper,

7. Cellulose nanocrystals (CNCs) obtained with the method according to one or more of claims 1-3, **characterised in that** it forms pourable suspensions.

8. Cellulose nanocrystals (CNCs) according to claim 7, **characterised in that** a pourable suspension is obtained and followed by a microwave heating of a suspension composed of 10 g of cellulosic raw material and 1 litre of APS solution (1M), within a heating time interval of 70 to 180 min at a temperature within a range comprised between 110°C and 140°C, the hydrodynamic diameter of the obtained cellulose nanocrystals in suspension being comprised between 0.1634 +/-0.0022 microns and 0.2689 +/-0.0089 V and the zeta potential thereof being comprised between -0.0227 +/-0.0009 microns and -0.0375 +/-0.0058 V.
